Europäisches Patentamt

European Patent Office

Office européen des brevets

(19)

(11) Numéro de publication : **0 408 411 B1**

(12) **FASCICULE DE BREVET EUROPEEN**

(45) Date de publication du fascicule du brevet :
07.01.93 Bulletin 93/01

(51) Int. Cl.⁵ : **A23C 7/04,** A23C 19/05,
A23C 13/12

(21) Numéro de dépôt : **90401831.4**

(22) Date de dépôt : **26.06.90**

(54) **Procédé de préparation de produits laitiers à teneur réduite en stérols, notamment en cholestérol.**

(30) Priorité : **12.07.89 FR 8909443**

(43) Date de publication de la demande :
**16.01.91 Bulletin 91/03**

(45) Mention de la délivrance du brevet :
**07.01.93 Bulletin 93/01**

(84) Etats contractants désignés :
**AT BE CH DE DK ES FR GB GR IT LI LU NL SE**

(56) Documents cités :
**EP-A- 0 256 911
EP-A- 0 318 326
US-A- 3 491 132
JOURNAL OF FOOD SCIENCE, vol. 45, no. 2, 1980, pages 331-335; N.B. HELBIG et al.: "Debittering of skim milk hydrolysates by adsorption for incorporation into acidic beverages"**

(56) Documents cités :
**STÄRKE, vol. 34, no. 11, 1982, pages 379-385; J. SZESTLI: "Cyclodextrins in food, cosmetics and toiletries"
PATENT ABSTRACTS OF JAPAN, vol. 6, no. 114 (C-110)[992], 25 juin 1982; & JP-A-57 43 639 (TOSHIYUKI OOTA) 11-03-1982**

(73) Titulaire : **Roquette Frères
F-62136 Lestrem (FR)**

(72) Inventeur : **Graille, Jean
7 La Capelette
F-34750 Villeneuve les Maguelonne (FR)**
Inventeur : **Pioch, Daniel
1170 Chemin de Nouau
F-34730 Prades le Lez (FR)**
Inventeur : **Serpelloni, Michel
155 Route Nationale
F-62660 Beuvry-les-Bethune (FR)**
Inventeur : **Mentink, Léon
96 Rue du Collège
F-59940 Estaires (FR)**

(74) Mandataire : **Koch, Gustave et al
Cabinet PLASSERAUD 84, rue d'Amsterdam
F-75009 Paris (FR)**

EP 0 408 411 B1

## Description

La présente invention a trait à un procédé de préparation de produits laitiers à teneur réduite en stérols, notamment en cholestérol.

Les produits de départ utilisés dans le procédé conforme à l'invention sont des émulsions huile dans eau comprenant des matières grasses d'origine laitière comme par exemple le lait ou la crème. Le lait est un liquide sécrété par les glandes mammaires de femelles mammifères. Il est composé de cinq constituants majeurs:

- les lipides essentiellement sous forme de triglycérides,
- les protéines,
- les glucides,
- les sels,
- et l'eau.

La crème est en fait un lait enrichi en matière grasse par écrémage spontané ou centrifuge. Elle contient donc les mêmes éléments majeurs que le lait mais dans des proportions différentes.

Ces deux produits comprennent également des constituants présents en quantités très minimes comme les lécithines, les vitamines, les enzymes, les gaz dissous, les acides gras présents naturellement dans le lait et/ou issus de l'hydrolyse des triglycérides, et les stérols. Ces derniers sont essentiellement représentés par le cholestérol à hauteur de 98% et sont des substances associées à la matière grasse. La graisse du lait de vache contient environ 0,3% de cholestérol soit 0,1 g par litre de lait.

Or, il a été établi depuis fort longtemps que les taux sanguins élevés de cholestérol (cholestérol LDL) sont en corrélation directe avec des maladies cardio-vasculaires graves.

La principale d'entre elles est l'athérosclérose qui se traduit par l'altération de la paroi des artères et dont l'une des causes est le dépôt localisé, excessif et anormal de cholestérol sur la face interne de la paroi d'une artère. L'athérome ainsi formé peut avoir des conséquences tragiques comme l'infarctus du myocarde. A titre illustratif, on peut indiquer qu'une diminution de 1% du cholestérol sanguin total entraîne une diminution de 2% du risque coronarien. L'excès de cholestérol peut également être à l'origine de calculs biliaires.

La prévention demeure l'un des moyens les plus efficaces pour remédier à ces pathologies. Elle peut consister à diminuer autant que possible l'ingestion d'aliments riches en cholestérol ou bien encore à consommer des denrées à teneur réduite en cholestérol.

L'un des soucis des industriels de l'alimentaire est donc d'éliminer le cholestérol des produits de consommation courante et notamment des produits laitiers.

Ainsi, il a déjà été proposé diverses méthodes d'extraction des stérols des graisses.

L'une d'elles consiste à mettre en contact la matière grasse d'origine animale avec de la digitonine qui a la propriété de réagir avec le cholestérol pour donner un précipité. Les performances et les résultats de cette méthode ne sont pas satisfaisants du fait de la difficulté de séparation du précipité du milieu. Cette méthode est, en tout état de cause, inapplicable industriellement.

Le cholestérol peut également être extrait des matières grasses par entraînement à l'aide d'un solvant. L'inconvénient majeur de ce procédé est que les solvants généralement employés sont toxiques et qu'il en reste toujours des traces dans les matières grasses considérées.

On connaît également des procédés de microdistillation, inapplicables au niveau industriel, ou bien encore d'adsorption sur colonnes, comme il est décrit par exemple dans les demandes de brevet européen EP n° 0 174 848 et EP n° 0 318 326. Ces demandes enseignent un procédé suivant lequel la matière grasse maintenue à l'état liquide passe au travers d'une colonne d'adsorbant, en l'occurrence du charbon actif. Il est clair qu'un tel procédé est très lourd à mettre en oeuvre et, de surcroît, l'extraction qu'il permet n'est pas très sélective.

Un autre procédé physico-chimique d'extraction du cholestérol des graisses est divulgué par la demande de brevet japonais JP n° 59/140299. Il consiste à mettre en contact une matière sèche chargée en cholestérol telle que de la poudre de lait, avec du $CO_2$ supercritique à une température comprise entre 35 et 45°C et à une pression comprise entre 130 et 200 atm. L'obtention de ces conditions physiques nécessite l'emploi d'un matériel complexe et onéreux. La conduite du procédé en est ainsi très délicate. De plus, comme il est précisé dans la demande de brevet, d'autres composés lipidiques sont entraînés par le $CO_2$ supercritique. Ce procédé n'est donc pas sélectif.

Pour éliminer les stérols des graisses, il a été également imaginé un procédé de biodégradation desdits stérols divulgué par la demande de brevet EP n° 0 278 794 et mettant en oeuvre des bactéries qui, mises au contact de la matière grasse, sont aptes à métaboliser au moins l'un des stérols qu'elle contient. Comme tous les procédés faisant intervenir des fermentations, ce procédé de biodégradation est très délicat à conduire du fait de la variabilité inhérente à la matière vivante. De plus, les matériels employés, la durée relativement longue sont, entre autres, des éléments qui rendent un tel procédé onéreux. Enfin, les catabolites produits lors de ces fermentations restent à ce jour totalement inconnus sur le plan de leur nature et de leur toxicité, et sont, de toute façon, présents dans la matière grasse ainsi traitée.

On connaît aussi, par la demande de brevet européen EP n° 0 256 911, un procédé d'élimination du cholestérol contenu dans une matière grasse d'origine animale. Il est basé sur la propriété déjà mise à jour qu'ont les cyclodextrines-polyglucoses cycliques de conformation tubulaire tronconique à 6, 7 ou 8 motifs glucose et désignées respectivement par alpha, bêta ou gamma - de recevoir dans leur cavité centrale hydrophobe des molécules de stérols et notamment de cholestérol, pour former des complexes d'inclusion solubles dans l'eau. Selon ce procédé, la matière grasse maintenue fluide est mise en contact avec une cyclodextrine sous agitation pendant 30 minutes à 10 heures de façon à permettre la formation de complexes. La séparation de ces derniers est ensuite réalisée par introduction dans le milieu réactionnel, d'eau qui solubilise ces complexes. La solution aqueuse ainsi obtenue est ensuite recueillie après décantation.

Le rendement d'extraction du cholestérol par ce procédé est peu important. Dans le meilleur des cas, il n'est en effet que de 41%, et ce après trois extractions successives, comme il est indiqué dans l'exemple 3 de la description de cette demande de brevet européen.

Il est à noter que, selon ce procédé, la matière grasse doit être maintenue en fusion sous une atmosphère exempte d'oxygène. Ces caractéristiques techniques impliquent le recours à un appareillage spécifique de maintien en température et d'alimentation en gaz neutre. Enfin, la durée nécessaire uniquement pour la première phase de complexation est au minimum de 30 minutes et en réalité de 2 à 3 heures comme indiqué dans les exemples. Ce procédé est donc nécessairement coûteux en temps, en matériel et en énergie.

Hormis ces performances peu satisfaisantes, ce procédé constitue une succession d'étapes supplémentaires dans la fabrication d'un produit alimentaire et s'intègre dans une démarche industrielle quelque peu irrationnelle. En effet, il consiste tout d'abord à fabriquer la matière grasse sous une forme anhydre, à lui faire subir le traitement lourd d'extraction de cholestérol, puis à l'amener vers un état approprié dans lequel elle pourra être utilisable dans un procédé d'obtention de produits alimentaires. Dans le cas d'une matière grasse laitière, ces produits alimentaires peuvent être des laits de consommation reconstitués, des yaourts, des fromages ou autres. Il est clair qu'un tel schéma n'est pas acceptable sur le plan de la rentabilité industrielle.

Il ressort de ce qui précède qu'aucune des solutions de l'art antérieur n'a permis jusqu'à maintenant de produire des matières grasses alimentaires appauvries en stérols - notamment en cholestérol - de manière satisfaisante, c'est-à-dire répondant aux conditions industrielles de rentabilité économique, de souplesse d'utilisation, et de qualité des produits finaux.

De plus, au regard de cette qualité des produits finaux obtenus par mise en oeuvre des procédés connus, il est important d'observer que ces produits, comme toute matière grasse laitière, sont susceptibles de s'oxyder et de rancir, ce qui les rend impropres à la consommation. En effet, la matière grasse laitière comprend des composés insaturés réagissant très facilement avec l'oxygène de l'air. C'est la raison pour laquelle, dans le procédé décrit dans la demande de brevet EP n° 0 256 911 mentionnée ci-dessus, il est prévu de travailler sous azote. Mais il n'en demeure pas moins que les produits ainsi traités restent très fortement sujets au rancissement, ce qui porte inévitablement atteinte à leur valeur alimentaire.

L'un des objectifs essentiels de la présente invention est donc de remédier aux inconvénients de l'art antérieur précité en proposant un procédé de préparation de produits laitiers à teneur réduite en stérols et notamment en cholestérol. Par conséquent, il ne s'agit plus d'extraire les stérols de produits intermédiaires que sont les matières grasses d'origine animale, mais en revanche d'intégrer l'élimination de stérols dans la chaîne d'obtention de produits laitiers.

Cette reformulation du problème technique, même si elle semble a priori plus logique, ne s'imposait pas à l'évidence du fait de l'existence d'un certain nombre d'obstacles et de préjugés techniques qui n'ont jamais été surmontés malgré la connaissance déjà ancienne des problèmes liés au cholestérol alimentaire.

En premier lieu, il faut savoir que les émulsions huile dans eau laitières comme le lait et la crème sont des milieux hétérogènes et complexes constitués par des suspensions colloïdales de particules (globules de matière grasse et micelles protéiques) dans une phase aqueuse dispersante. Le cholestérol ne représente qu'un constituant mineur parmi de nombreuses autres substances libres telles que les protéines ou les acides gras. En outre, il est intégré dans la structure membranaire des globules gras. Il est donc a priori non directement accessible. Sachant cela, il était raisonnable d'en conclure que la cyclodextrine mise en contact d'un tel milieu n'aurait aucune affinité particulière pour le cholestérol du fait de la compétition importante existant entre les composés du milieu vis-à-vis de la cyclodextrine, et de la situation du cholestérol dans les membranes des globules gras.

En second lieu, même dans l'hypothèse suivant laquelle la cyclodextrine complexerait le cholestérol, on pouvait craindre l'apparition d'un phénomène d'inversion d'émulsion du fait du rôle connu du cholestérol dans la stabilisation de la structure membranaire des globules gras constituant l'émulsion huile dans eau. Or, il est évident qu'un milieu laitier ayant subi une inversion d'émulsion n'est plus une matière première de base convenable pour la fabrication de nombreux produits laitiers. Pour l'exploiter, il serait donc indispensable de la retraiter en recourant par exemple à des émulsifiants exogènes. On retrouverait là les travers des procédés connus.

En troisième lieu, il est indiqué dans un ouvrage de référence ("Science du lait", Charles ALAIS, page 102) que le cholestérol a également un rôle d'inhibiteur des lipases à l'origine du rancissement des émulsions huile dans eau laitières. Cela constitue, là encore, un frein à l'idée de l'extraction du cholestérol de tels milieux.

En allant à l'encontre de tous ces préjugés techniques, la Demanderesse a fait preuve d'une démarche inventive en mettant au point le procédé conforme à l'invention.

Aussi, c'est seulement après avoir mené toute une série d'études et d'essais, notamment au sein de la Division Chimie des Corps Gras de l'IRHO-CIRAD, que la Demanderesse a mis en évidence, de façon tout à fait surprenante et inattendue, le fait suivant lequel il était possible de préparer des produits laitiers à teneur réduite en stérols, notamment en cholestérol, en mettant en contact une émulsion huile dans eau comprenant des matières grasses d'origine laitière, avec de la cyclodextrine en quantité suffisante pour former des complexes d'inclusion avec les stérols de telle sorte que ces derniers puissent être extraits de la matière grasse, et, de façon simultanée ou non, à séparer lesdits complexes du milieu sans inverser l'émulsion huile dans eau de départ en émulsion eau dans huile.

Il est tout d'abord apparu que, dans les conditions du procédé, la cyclodextrine avait une affinité sélective remarquable vis-à-vis du cholestérol présent à la surface des globules gras contenus dans une émulsion huile dans eau laitière.

On a constaté également que l'émulsion huile dans eau de départ n'était pas inversée en émulsion eau dans huile, et ce malgré l'élimination du cholestérol, qui est pourtant supposé être un agent important dans la stabilité physique de l'émulsion,en raison de son rôle tensio-actif.

Par ailleurs, dans le procédé conforme à la présente invention, la matière grasse est intégrée dans une émulsion huile dans eau, ce qui permet de limiter ses contacts avec l'oxygène de l'air, donc les phénomènes d'oxydation.

En outre et de manière encore plus inattendue et avantageuse, les produits laitiers issus du procédé conforme à l'invention présentent une stabilité accrue vis-à-vis de l'oxydation par rapport à des produits témoins. Ainsi, les problèmes de rancissement qui provoquent l'apparition d'une saveur rédhibitoire dans les produits laitiers sont au moins partiellement résolus par mise en oeuvre du procédé suivant l'invention. Ceci est d'autant plus étonnant que, comme précisé ci-avant, le cholestérol extrait est connu pour être un inhibiteur de l'action des lipases qui interviennent dans les phénomènes d'oxydation.

Sans que cela ne puisse constituer une limitation à la présente invention, on peut penser que cette amélioration de la résistance à l'oxydation des produits préparés conformément à l'invention est due notamment au fait que les acides gras libres, naturellement présents dans la matière grasse du lait ou issus de la lipolyse des triglycérides, se complexent aussi avec la cyclodextrine et sont séparés en même temps que les complexes cyclodextrine-cholestérol. Or, ces acides gras libres, souvent insaturés, ont une forte propension à s'oxyder et par là même à induire également l'oxydation d'autres composés insaturés de la matière grasse tels que les triglycérides, les vitamines et les phospholipides.

Cette tendance à l'oxydation peut être appréciée en mesurant l'indice d'acide tandis que l'indice de peroxyde est un paramètre significatif du niveau d'oxydation des matières grasses laitières ainsi que des produits en contenant.

Suivant la présente invention, l'émulsion huile dans eau de départ utilisée peut être du lait ou de la crème de toute origine animale (vaches ou autres) et de toute nature.

La distinction entre le lait et la crème sera faite en considérant que le premier a une concentration en matière grasse inférieure ou égale à 10% en poids tandis que celle de la seconde est supérieure à 10% en poids.

Le lait ou la crème peut notamment être cru, traité thermiquement (pasteurisation, stérilisation UHT), enrichi en matière grasse, homogénéisé, ou reconstitué par exemple à partir de matière grasse laitière anhydre et de lait écrémé.

Dans le cadre de l'invention, le terme "cyclodextrine" doit être compris comme englobant les oligo-saccharides cycliques, et constitués de 6, 7 ou 8 unités glucopyranose dont l'une au moins peut être mono- ou poly-substituée, les polymères dont les monomères sont constitués par ces oligo-saccharides cycliques, ainsi que ces produits greffés ou fixés sur support inerte.

La cyclodextrine employée peut donc être du type alpha, bêta ou gamma, de préférence bêta, substituée ou non. Les groupements mono- ou polysubstituants de la cyclodextrine peuvent être notamment des alkyls tels que l'hydroxypropyl ou des saccharides du type glycosyl, maltosyl ou autres.

La cyclodextrine sous forme polymérisée, réticulée ou non, pouvant être utilisée dans le procédé conforme à l'invention, est par exemple du type de celle obtenue par polymérisation de monomères de bêta-cyclodextrine avec de l'épichlorhydrine.

Conformément à un premier mode de mise en oeuvre du procédé de l'invention,l'étape de mise en contact consiste à ajouter la cyclodextrine dans l'émulsion huile dans eau de départ, puis à mélanger ces deux composés par agitation modérée pendant un temps t suffisant pour permettre la formation de complexes cyclodextrine-stérol (cholestérol).

La température à laquelle est effectuée cette mise en contact est de préférence supérieure ou égale à 1°C, de préférence à 15°C tandis que t est supérieur ou égal à quelques secondes, de préférence à quelques minutes.

De plus, il s'avère que la concentration en cyclodextrine doit être comprise entre 0,01 et 100% en poids par rapport à la matière grasse laitière, de préférence entre 1 et 50% en poids et, plus préférentiellement encore, entre 2 et 25% en poids.

Le mélange cyclodextrine-émulsion huile dans eau de départ est, de préférence, soumis à au moins un traitement physique de séparation des complexes formés se présentant sous forme soluble ou non dans l'eau.

Pour éliminer les complexes se présentant sous forme insoluble dans l'eau, différents traitements peuvent être mis en oeuvre. Il peut s'agir d'une centrifugation, d'une décantation, d'une filtration sur membrane ou de toute autre technique connue en soi et appropriée.

Afin d'améliorer l'efficacité d'un tel traitement, il convient, suivant l'invention et de préférence lorsque la cyclodextrine est sous forme non polymérisée, de diminuer la solubilité des complexes formés en l'effectuant à une température, de préférence inférieure ou égale à 20°C, par exemple égale à 4°C. De cette manière, la proportion de complexes insolubles est augmentée, leur séparation de la (ou des) phase(s) liquide(s) en est donc facilitée.

Dans le cas d'une centrifugation, on obtient une partie liquide et une partie solide formant le culot de centrifugation. Cette partie liquide est constituée d'une phase grasse surnageante ou crème de laquelle ont été extraits au moins en partie les complexes stérols (cholestérol)-cyclodextrine du fait de leur faible affinité pour la matière grasse, et d'une phase aqueuse ou lait écrémé contenant une quantité plus ou moins importante de complexes solubles, suivant la température de traitement choisie.

Le lait écrémé et la crème ainsi obtenue peuvent être homogénéisés pour former un lait entier reconstitué, ou être utilisés séparément.

Si le traitement physique de séparation choisi est une filtration, le rétentat comprend les complexes insolubles dans l'eau tandis que le filtrat est une émulsion huile dans eau non déphasée. Le produit obtenu à teneur réduite en stérols et notamment en cholestérol est utilisable dans l'industrie laitière à titre de matière première, de produit intermédiaire ou de produit fini.

Suivant une caractéristique avantageuse de l'invention, les complexes se présentant sous forme soluble sont éliminés par l'intermédiaire d'un traitement physique de séparation du type ultrafiltration, osmose inverse ou autres.

De telles techniques sont parfaitement maîtrisées par l'homme du métier. Suivant l'invention, elles peuvent être appliquées directement sur le mélange émulsion de départ/cyclodextrine, sur la phase aqueuse (lait écrémé) issue de la centrifugation ou bien encore sur le filtrat provenant du passage sur membrane du mélange. Elles consistent à concentrer le substrat concerné par passage au travers d'une membrane sélective, de manière à éliminer l'eau ainsi que toutes les substances solubles parmi lesquelles figurent une partie des complexes cyclodextrine-cholestérol.

Conformément à une variante du premier mode de mise en oeuvre du procédé conforme à l'invention, s'appliquant plus spécifiquement à la fabrication de fromages du type comprenant une étape de coagulation conduisant à la formation d'un caillé et au moins une étape d'extraction du lactosérum telle que l'égouttage ou le pressage, le lait est de préférence employé comme émulsion huile dans eau de départ et l'on a recours à un agent coagulant.

Celui-ci est ajouté au lait préalablement et/ou simultanément et/ou postérieurement à la mise en contact du lait avec de la cyclodextrine.

Cela permet d'obtenir d'une part, un caillé apte à subir une quelconque transformation fromagère et d'autre part, du lactosérum ou phase aqueuse contenant tout ou partie des complexes formés. Ce lactosérum est susceptible d'être au moins partiellement séparé du caillé au cours d'au moins une étape d'extraction s'intégrant dans la fabrication du fromage.

La coagulation de la caséine du lait occasionne une contraction du réseau régulier formé par les protéines coagulées et renfermant les globules gras et le sérum, avec expulsion progressive de ce dernier. Ce phénomène est dénommé communément synérèse. Il permet, dans le cadre du procédé de l'invention, la séparation des complexes cholestérol-cyclodextrine solubles dans l'eau du caillé.

Ce dernier présente alors l'avantage d'être notablement appauvri en cholestérol.

L'agent coagulant employé est constitué soit par au moins un acidogène tel que la glucono-delta-lactone et/ou par des ferments lactiques, soit par au moins une enzyme coagulante de nature appropriée telle que la présure, soit par les deux.

5

Il va de soi que cette variante du procédé conforme à l'invention peut être appliquée à toute fabrication fromagère du type défini ci-dessus et connue par le technicien compétent dans le domaine considéré. Elle ne nécessite aucun équipement supplémentaire et n'allonge sensiblement pas les durées de fabrication.

En outre, l'ajout de cyclodextrine n'entraîne aucune incidence néfaste tant sur le plan qualitatif que sur le plan quantitatif sur les fromages obtenus à teneur réduite en cholestérol.

Suivant un deuxième mode de mise en oeuvre du procédé de l'invention, la mise en contact de l'émulsion huile dans eau de départ comprenant des matières grasses d'origine laitière avec de la cyclodextrine, ainsi que la séparation des complexes formés de l'émulsion de départ s'effectuent sensiblement simultanément et consistent à faire migrer ladite émulsion de départ au travers d'un adsorbant ou absorbant constitué au moins en partie par de la cyclodextrine.

Il s'agit de préférence d'une chromatographie sur colonne contenant avantageusement de la bêta-cyclodextrine se présentant sous forme polymérisée, réticulée ou non et obtenue par exemple par polymérisation à l'aide d'un composé bifonctionnel tel que l'épichlorhydrine.

Selon une variante, la cyclodextrine peut être immobilisée sur un support constitué par exemple de billes de verre. Ceci est plus particulièrement applicable au cas où la cyclodextrine se présente sous forme de monomères.

Suivant une caractéristique avantageuse de l'invention, l'émulsion huile dans eau de départ est portée, avant migration, à une température comprise enre 5 et 60°C.

Dans le cas du lait, cette température est de préférence comprise entre 5 et 35°C. En revanche, pour la crème, plus visqueuse, elle est avantageusement comprise entre 35° et 60°C.

De toute façon, l'invention sera mieux comprise à l'aide des exemples non limitatifs qui suivent, de mise en oeuvre du procédé de préparation de produits laitiers à teneur réduite en stérols et notamment en cholestérol, qu'elle concerne.

EXEMPLE 1

**Préparation d'une crème appauvrie en cholestérol par ajout de bêta-cyclodextrine au lait.**

Dans cet exemple, le produit de départ est un lait cru de vache non pasteurisé et non homogénéisé. Il contient 38 g/l de matières grasses.

De la bêta-cyclodextrine en poudre, commercialisée par la Société ROQUETTE FRERES sous la marque déposée KLEPTOSE[R] et contenant 13,6% d'eau, est ajoutée au lait entier porté à une température de 25°C environ à raison de 1,0% en poids par rapport au lait, soit 27% en poids par rapport à la matière grasse.

Le mélange lait entier/bêta-cyclodextrine maintenu à cette température de 25°C, est agité manuellement de façon intense, pendant environ 20 secondes. Il est ensuite refroidi à 4°C de façon à insolubiliser au moins en partie les complexes formés, puis centrifugé à cette température et à 8000 t/min pendant 20 minutes.

Un lait témoin, sans bêta-cyclodextrine, est refroidi et centrifugé, dans les mêmes conditions que celles décrites ci-dessus.

Avant centrifugation, deux phases distinctes sont obtenues dans le cas du lait ne contenant pas de bêta-cyclodextrine. La première, surnageante, est la crème. La seconde, plus lourde, est le lait écrémé. Pour l'essai avec bêta-cyclodextrine, une troisième phase apparaît, sous forme d'un culot solide.

Le cholestérol total contenu dans les crèmes surnageantes et dans les laits écrémés est dosé par chromatographie en phase gazeuse après saponification, extraction de l'insaponifiable et silylation.

Les résultats suivants sont obtenus:

|  |  | Témoin: sans ajout de ß-cyclodextrine | Essai avec 1% de ß-cyclodextrine ajoutée au lait entier |
|---|---|---|---|
| Crèmes | Cholestérol en % de la crème crème surnageante | 0,21 | 0,10 |
| Laits écrémés | Cholestérol en % du lait écrémé | $3,0 \times 10^{-3}$ | $2,1 \times 10^{-3}$ |

La crème du lait traité avec bêta-cyclodextrine conformément à l'invention est pauvre en cholestérol. Le taux de réduction par rapport à la crème du lait témoin est de l'ordre de 52%.

Le lait écrémé obtenu par mise en oeuvre du procédé conforme à l'invention ne contient pas plus de cholestérol que le lait écrémé témoin.

L'indice d'acide des crèmes est mesuré par filtration acidimétrique en millilitres d'hydroxyde de potassium pour 100 grammes de matière grasse (Méthode AFNOR T 60204). La crème témoin présente après préparation un indice d'acide de 0,47, tandis que celui de la crème de l'essai est de 0,22.

Après 15 jours de stockage à l'air libre et à 4°C, la crème témoin possède un indice d'acide de 1,5 et présente un goût rance prononcé, tandis que la crème de l'essai possède un indice d'acide de 0,90 et présente une saveur de crème fraîche. L'amélioration de la stabilité de celle-ci vis-à-vis de l'oxydation ou rancissement est donc bien mise en évidence.

## EXEMPLE 2

**Taux de cholestérol des crèmes surnageantes en fonction des quantités de bêta-cyclodextrine mises en oeuvre dans le lait.**

Dans cet exemple, le lait utilisé est le même que celui employé dans l'exemple 1.

Des quantités croissantes de bêta-cyclodextrine sont ajoutées au lait entier.

Les mélanges lait entier/bêta-cyclodextrine sont agités mécaniquement pendant 15 minutes de façon lente, et à température ambiante. Ils sont ensuite refroidis à 4°C et centrifugés à cette température et à 8000 t/min pendant 20 minutes.

Les dosages de cholestérol sont réalisés comme décrit dans l'exemple 1.

|  | Témoin sans ß-cyclo-dextrine | Essais avec ß-cyclodextrine Quantités introduites en % du lait entier | | | | |
|---|---|---|---|---|---|---|
|  |  | 0,1 | 0,3 | 0,6 | 0,9 | 1,2 |
| Cholestérol dans les crèmes surnageantes (en %) | 0,21 | 0,18 | 0,17 | 0,14 | 0,10 | 0,08 |

A mesure que les quantités de bêta-cyclodextrine introduites dans le lait entier augmentent, le cholestérol présent dans les crèmes surnageantes diminue.

EXEMPLE 3

**Préparation d'un lait "entier" pauvre en cholestérol par recombinaison de la crème et du lait écrémé issus du procédé de préparation selon l'invention décrit dans l'exemple 1.**

La crème obtenue selon l'invention, après traitement du lait cru, avec 1% de bêta-cyclodextrine, est recombinée au lait écrémé par homogénéisation à 8000 t/min pendant 20 secondes.

Le lait entier ainsi préparé présente un taux de cholestérol réduit de 51% par rapport au lait entier témoin obtenu de la même manière. Les deux laits présentent un pH identique de 6,90.

De plus, le lait entier obtenu par mise en oeuvre du procédé selon l'invention possède des qualités organoleptiques et une stabilité physique au stockage à 5°C, comparables au lait entier témoin.

En ce qui concerne la stabilité à l'oxydation, il apparaît que celle du lait entier obtenu par mise en oeuvre du procédé de l'invention est supérieure à celle du lait entier témoin.

EXEMPLE 4

**Préparation d'une crème à teneur réduite en cholestérol par ajout de bêta-cyclodextrine polymérisée et filtration sur membrane.**

La crème utilisée dans cet exemple est une crème UHT commerciale contenant 35% de matières grasses et 0,12% de cholestérol total. Elle contient 99,98% des lipides contenus dans le lait initial.

La cyclodextrine utilisée est une bêta-cyclodextrine polymérisée à l'épichlorhydrine.

La crème est chauffée à 40°C. Une quantité de 2% en poids de bêta-cyclodextrine polymérisée, soit 6% en poids par rapport à la matière grasse, est ajoutée à la crème. L'ensemble est agité pendant 10 minutes à cette température, puis filtré sur membrane.

La crème filtrée n'a pas été destabilisée par l'ajout de cyclodextrine. Elle présente une teneur en cholestérol total de 0,07% en poids soit une réduction de 42% de la teneur en cholestérol.

EXEMPLE 5

**Préparation d'un lait entier pauvre en cholestérol par passage sur une colonne de bêta-cyclodextrine polymérisée.**

Dans cet exemple, le lait de départ est un lait cru, non homogénéisé et non pasteurisé, présentant une teneur en matière grasse de 37,5 g/l, une densité de 1,0332 et une teneur en cholestérol total de 21,5 mg pour 100 g.

La cyclodextrine employée est une bêta-cyclodextrine polymérisée à l'épichlorhydrine.

Préparation des colonnes chromatographiques avec bêta-cyclodextrine polymérisée:

La bêta-cyclodextrine polymérisée est hydratée dans 6 à 10 fois son poids en eau. Elle est ensuite introduite dans une colonne en verre, et lavée à l'eau déminéralisée.

Passage du lait sur la colonne:

Le lait entier porté à une température de 20°C est chromatographié sur deux colonnes différentes préparées comme décrit ci-dessus. Les volumes de lait, élués, correspondent au moins à 50 fois la quantité de cyclodextrine contenue dans la colonne.

Les dosages de cholestérol total et d'indices d'acide sont effectués selon les méthodes décrites dans l'exemple 1.

|  | Lait de départ | Laits chromatographiés | |
| --- | --- | --- | --- |
|  |  | Essai 1 | Essai 2 |
| Taux de cholestérol total en mg/100 g de lait | 21,5 | 15,0 | 14,5 |
| Indice d'acide en ml de KOH/100 g de matière grasse | 0,45 | 0,25 | 0,20 |

Les densités et les teneurs en matières grasses des laits entiers chromatographiés sont sensiblement égales à celles du lait de départ soit respectivement 1,0332 et 37,3 g/l.

Les taux de réduction en cholestérol sont de l'ordre de 30% et ceux en indice d'acide de l'ordre de 50%.

Dans cet exemple, le lait entier constitue l'émulsion huile dans eau de départ. Bien entendu, cette dernière peut également être de la crème. Dans ce cas, il est évident pour l'homme du métier d'augmenter la température de passage sur la colonne, compte tenu du risque de colmatage de celle-ci en raison de la plus haute viscosité de la crème à température ambiante.

EXEMPLE 6

**Préparation d'un caillé à teneur réduite en cholestérol par introduction de bêta-cyclodextrine dans le lait et séparation des complexes formés lors de l'égouttage.**

Dans cet exemple, l'émulsion de départ est un lait entier pasteurisé du commerce contenant 36,5 g/l de matières grasses et 0,017% de cholestérol soit 0,46% de cholestérol par rapport à la matière grasse.

L'agent coagulant utilisé est constitué par des ferments lactiques et par une enzyme: la présure.

Une quantité de 1 litre de lait est ensemencée à l'aide de bactéries lactiques pures se développant à basse température.

Au terme de la fermentation, de la bêta-cyclodextrine pulvérulente, commercialisée par la société ROQUETTE FRERES sous la marque déposée KLEPTOSE[R] et contenant 13,6% d'eau est ajoutée au lait à raison de 1,0% en poids, à une température de 18-20°C.

Le mélange lait/bêta-cyclodextrine est agité manuellement de façon intense pendant environ 20 secondes.

L'emprésurage est ensuite réalisé à cette même température de 18-20°C, à raison de 0,01 à 0,02 ml de présure diluée au 1/10 000 pour 1 litre de lait. Après 24 heures de coagulation, le caillé est égoutté de manière à éliminer le lactosérum.

Un litre de lait témoin auquel l'on n'a pas ajouté de bêta-cyclodextrine a été traité dans les mêmes conditions pour obtenir un caillé.

Les dosages effectués conformément à la méthode décrite dans l'exemple 1 ont donné les résultats suivants:

|  | Essai avec lait Témoin sans ajout de bêta-cyclodextrine | Essai avec lait contenant 1% en poids de bêta-cyclodextrine |
| --- | --- | --- |
| Cholestérol en % par rapport à la matière grasse du caillé | 0,40 | 0,19 |

Le taux de réduction en cholestérol du caillé obtenu par mise en oeuvre du procédé suivant l'invention est de l'ordre de 52%.

Après 15 jours de stockage des caillés à l'air libre et à 4°C, il est apparu que le caillé préparé avec ajout de bêta-cyclodextrine dans le lait avait moins souffert du rancissement que celui préparé sans ajout de bêta-cyclodextrine dans le lait.

Il a été également observé que l'ajout de bêta-cyclodextrine ne perturbe pas les aptitudes fromagères du lait. Hormis une légère diminution de la fermeté, le caillé obtenu à partir du lait traité suivant l'invention présente sensiblement les mêmes qualités que celui obtenu à partir du lait témoin.

Il ressort des exemples décrits ci-dessus que le procédé conforme à l'invention permet d'obtenir des produits laitiers à stabilité accrue à l'oxydation et à teneur réduite en stérols et notamment en cholestérol de façon particulièrement aisée et économique.

A partir d'émulsions de départ telles que le lait ou la crème, ce procédé permet notamment, de préparer du lait entier, de la crème, du lait notamment écrémé, du fromage appauvris en cholestérol.

Il est clair que ces produits peuvent être destinés directement à la consommation, ou transformés en différents produits laitiers finis ou semi-finis.

C'est ainsi que le lait entier appauvri en cholestérol peut servir de base à la préparation de yaourts, de fromages, de crèmes elles-mêmes utilisables par exemple comme matière première dans la fabrication de beurre ou sous une forme transformée ou non comme ingrédient alimentaire, ou autres.

Une crème appauvrie en cholestérol par mise en oeuvre du procédé conforme à l'invention peut être, soit homogénéisée avec un lait écrémé standard pour former un lait entier reconstitué, directement consommable ou utilisable dans la fabrication de produits lactés, soit utilisée également comme produit directement consommable ou comme produit de départ ou intermédiaire dans la fabrication de produits lactés.

Cette énumération n'est nullement limitative. Elle est destinée à donner une indication sur les multiples débouchés des produits laitiers obtenus par mise en oeuvre du procédé selon l'invention.

**Revendications**

1. Procédé de préparation de produits laitiers à teneur réduite en stérols et notamment en cholestérol, caractérisé en ce qu'il consiste essentiellement à mettre en contact une émulsion huile dans eau comprenant des matières grasses d'origine laitière avec de la cyclodextrine en quantité suffisante pour former des complexes d'inclusion avec les stérols de telle sorte que ces derniers puissent être extraits de la matière grasse, et de façon simultanée ou non, à séparer au moins partiellement lesdits complexes du milieu sans inverser l'émulsion huile dans eau de départ.

2. Procédé selon la revendication 1, caractérisé en ce que l'émulsion huile dans eau de départ utilisée est du lait ou de la crème de toute origine animale et de toute nature, la concentration en matières grasses du lait étant inférieure ou égale à 10% en poids et celle de la crème supérieure à 10% en poids.

3. Procédé selon la revendication 1 ou la revendication 2, caractérisé en ce que la cyclodextrine employée est du type alpha, bêta ou gamma, substituée ou non.

4. Procédé selon la revendication 3, caractérisé en ce que la cyclodextrine est sous forme polymérisée, réticulée ou non.

5. Procédé selon l'une quelconque des revendications 1 à 4, caractérisé en ce que la mise en contact consiste tout d'abord à mélanger l'émulsion huile dans eau de départ avec de la cyclodextrine, pendant un temps t suffisant pour permettre la formation de complexes.

6. Procédé selon la revendication 5, caractérisé en ce que la mise en contact s'effectue à une température supérieure ou égale à 1°C, de préférence à 15°C.

7. Procédé selon la revendication 5 ou la revendication 6, caractérisé en ce que la concentration en cyclodextrine est comprise entre 0,01 et 100% en poids par rapport à la matière grasse laitière, de préférence entre 1 et 50% en poids et plus préférentiellement encore entre 2 et 25% en poids.

8. Procédé selon l'une quelconque des revendications 5 à 7, caractérisé en ce que le mélange ainsi obtenu est soumis à au moins un traitement physique de séparation des complexes formés se présentant sous forme soluble ou non dans l'eau.

9. Procédé selon la revendication 8, caractérisé en ce que le traitement physique de séparation est du type centrifugation, décantation, filtration ou autres et permet d'éliminer au moins partiellement les complexes se présentant sous forme insoluble dans l'eau.

10. Procédé selon la revendication 8 ou la revendication 9, caractérisé en ce que le traitement physique de séparation est du type ultrafiltration, osmose inverse ou autres et permet d'éliminer au moins partiellement les complexes se présentant sous forme soluble dans l'eau.

11. Procédé selon la revendication 9, caractérisé en ce que la cyclodextrine utilisée est sous forme non polymérisée et en ce que le traitement physique de séparation est effectué à une température choisie de manière à diminuer la solubilité dans l'eau des complexes formés, cette température étant de préférence inférieure ou égale à 20°C, et plus préférentiellement encore de l'ordre de 4°C.

12. Procédé selon l'une quelconque des revendications 5 à 7, appliqué à la fabrication de fromages du type comprenant une étape de coagulation conduisant à la formation d'un caillé et au moins une étape d'extraction du lactosérum, caractérisé en ce que l'émulsion huile dans eau de départ est de préférence un lait et en ce qu'il consiste à ajouter à l'émulsion huile dans eau de départ un agent coagulant de manière à obtenir d'une part, un caillé apte à subir toute transformation fromagère et d'autre part un lactosérum ou phase aqueuse contenant tout ou partie des complexes formés et étant susceptible d'être au moins partiellement séparé du caillé au cours d'une étape d'extraction.

13. Procédé selon la revendication 12, caractérisé en ce que l'agent coagulant est constitué par au moins un acidogène et/ou par des ferments lactiques, associé(s) à ou remplacé(s) par au moins une enzyme coagulante de nature appropriée telle que la présure.

14. Procédé selon l'une quelconque des revendications 1 à 4, caractérisé en ce que la mise en contact et la séparation s'effectuent sensiblement simultanément et consistent à faire migrer l'émulsion huile dans eau de départ au travers d'un adsorbant ou absorbant constitué au moins en partie par de la cyclodextrine.

15. Procédé selon la revendication 14, caractérisé en ce que la cyclodextrine est immobilisée sur un support.


**Patentansprüche**

1. Verfahren zur Herstellung von Milchprodukten mit einem verringerten Gehalt an Sterolen und insbesondere an Cholesterin, dadurch gekennzeichnet, daß es im wesentlichen darin besteht, eine Öl-in-Wasser-Emulsion, die der Milch entstammende Fette enthält, mit Cyclodextrin in ausreichender Menge in Kontakt zu bringen, um Einschlußkomplexe mit den Sterolen zu bilden, derart, daß diese letzieren aus dem Fett extrahiert werden können, und gleichzeitig oder nicht gleichzeitig zumindest teilweise die komplexe von dem Milieu,ohne die Ausgangs-Öl-in-Wasser-Emulsion zu invertieren, abzutrennen.

2. Verfahren gemäß Anspruch 1, dadurch gekennzeichnet, daß die verwendete Ausgangs-Öl-in-Wasser-Emulsion aus Milch oder Rahm eines jeden tierischen Ursprungs und jeder Natur besteht, wobei die Fettkonzentration der Milch geringer oder gleich 10 Gew.% und diejenige des Rahms mehr als 10 Gew.% beträgt.

3. Verfahren gemäß Anspruch 1 oder 2, dadurch gekennzeichnet, daß das verwendete Cyclodextrin vom substituierten oder unsubstituiertem $\alpha$-, $\beta$- oder $\gamma$-Typ ist.

4. Verfahren gemäß Anspruch 3, dadurch gekennzeichnet, daß das Cyclodextrin in polymerisierter, vernetzter oder unvernetzter Form vorliegt.

5. Verfahren gemäß einem der Ansprüche 1 bis 4, dadurch gekennzeichnet, daß das Inkontaktbringen darin besteht, daß man zunächst die Ausgangs-Öl-in-Wasser-Emulsion mit Cyclodextrin während einer ausreichenden Zeitdauer t mischt, um die Bildung von Komplexen zu ermöglichen.

6. Verfahren gemäß Anspruch 5, dadurch gekennzeichnet, daß das Inkontaktbringen bei einer Temperatur von höher als oder gleich 1°C, vorzugsweise bei 15°C, erfolgt.

7. Verfahren gemäß Anspruch 5 oder 6, dadurch gekennzeichnet, daß die Konzentration an Cyclodextrin zwischen 0,01 und 100 Gew.%, bezogen auf das Milchfett, vorzugsweise zwischen 1 und 50 Gew.% und insbesondere zwischen 2 und 25 Gew.%, beträgt.

8. Verfahren gemäß einem der Ansprüche 5 bis 7, dadurch gekennzeichnet, daß das so erhaltene Gemisch zumindest einer physikalischen Behandlung zur Abtrennung der gebildeten Komplexe, die in in Wasser löslicher oder unlöslicher Form vorliegen, unterzogen wird.

9. Verfahren gemäß Anspruch 8, dadurch gekennzeichnet, daß die physikalische Behandlung zur Abtrennung vom Typ einer Zentrifugation, Dekantation, Filtration und dergl. ist und es ermöglicht, zumindest teilweise die Komplexe, die in in Wasser unlöslicher Form vorliegen, zu entfernen.

10. Verfahren gemäß Anspruch 8 oder 9, dadurch gekennzeichnet, daß die physikalische Behandlung zur Abtrennung vom Typ der Ultrafiltration, der umgekehrten Osmose und dergl. ist und es ermöglicht, zumindest teilweise die Komplexe, die in in Wasser löslicher Form vorliegen, abzutrennen.

11. Verfahren gemäß Anspruch 9, dadurch gekennzeichnet, daß das verwendete Cyclodextrin in nichtpolymerisierter Form vorliegt und daß die physikalische Behandlung zur Abtrennung bei einer Temperatur durchgeführt wird, die derart ausgewählt ist, daß die Löslichkeit der gebildeten Komplexe in Wasser herabgesetzt wird, wobei diese Temperatur vorzugsweise geringer oder gleich 20°C und insbesondere etwa 4°C beträgt.

12. Verfahren gemäß einem der Ansprüche 5 bis 7, angewandt auf die Herstellung von Käse des Typs, der eine Koagulationsstufe, die zur Bildung einer Dickmilch führt, und zumindest eine Stufe der Extraktion von Lactoserum umfaßt, dadurch gekennzeichnet, daß die Ausgangs-Öl-in-Wasser-Emulsion vorzugsweise eine Milch ist und daß es darin besteht, zu der Ausgangs-Öl-in-Wasser-Emulsion ein Koagulationsmittel zuzufügen, derart, daß man einesteils eine Dickmilch, die geeignet ist, jede Käseumwandlung zu durchlaufen, und anderenteils ein Lactoserum oder eine wäßrige Phase erhält, die vollständig oder teilweise die gebildeten Komplexe enthält und in der Lage ist, zumindest teilweise von der Dickmilch im Verlauf einer Extraktionsstufe abgetrennt zu werden.

13. Verfahren gemäß Ansprüch Anspruch 12, dadurch gekennzeichnet, daß das Koagulationsmittel zumindest aus einem Acidogen und/oder Milchfermenten, assoziiert mit oder ersetzt durch zumindest ein koagulierendes Enzym geeigneter Natur, wie Lab, besteht.

14. Verfahren gemäß einem der Ansprüche 1 bis 4, dadurch gekennzeichnet, daß das Inkontaktbringen und die Abtrennung im wesentlichen gleichzeitig erfolgen und darin bestehen, die Ausgangs-Öl-in-Wasser-Emulsion über ein Absorptionsmittel oder Absorptionsmittel, bestehend zumindest teilweise aus Cyclodextrin, wandern zu lassen.

15. Verfahren gemäß Anspruch 14, dadurch gekennzeichnet, daß das Cyclodextrin auf einem Träger immobilisiert ist.

## Claims

1. Process for the preparation of dairy products with a low sterol content and particularly cholesterol, characterized in that it consists essentially of contacting an oil-in-water emulsion comprising dairy fats with cyclodextrin in a sufficient amount to form inclusion complexes with the sterols so that the latter can be extracted from the fat, and simultaneously or not separating at least partly said complexes from the medium without inverting the starting oil-in-water emulsion.

2. Process according to claim 1, characterized in that the starting oil-in-water used is milk or cream of any animal origin and of any nature, the fat concentration of the milk being less than or equal to 10% by weight and that of the cream greater than 10% by weight.

3. Process according to claim 1 or claim 2, characterized in that the cyclodextrin employed is of the alpha, beta or gamma type, substituted or not.

4. Process according to claim 3, characterized in that the cyclodextrin is in polymerized form, cross-linked or not.

5. Process according to one of claims 1 to 4, characterized in that the contacting consists first of all of mixing the starting oil-in-water emulsion with the cyclodextrin, for a time t sufficient to permit formation of complexes.

6.  Process according to claim 5, characterized in that the contacting is carried out at a temperature greater than or equal to 1°C, preferably to 15°C.

7.  Process to any one of claims 5 to 6, characterized in that the cyclodextrin concentration is comprised between 0.01 and 100% by weight with respect to the dairy fat, preferably between 1 and 50% by weight and more preferably still between 2 and 25% by weight.

8.  Process according to any one of claims 5 to 7, characterized in that the mixture so obtained is subjected to at least one physical treatment of separation of the complexes formed occurring in soluble form or not in water.

9.  Process according to claim 8, characterized in that the physical separation treatment is of the centrifugation, decantation or filtration type or the like and enables the removal at least partly of the complexes occurring in insoluble form in the water.

10. Process according to claim 8 or claim 9, characterized in that the physical separation treatment is of the ultrafiltration, inverse osmosis type or the like and enables the removal at least partly of the complexes occurring in soluble form in the water.

11. Process according to claim 9, characterized in that the cyclodextrin used is in non-polymerized form and in that the physical separation treatment is carried out at temperature selected so as to reduce the solubility in water of the complexes formed, this temperature being less than or equal to 20°C, and more preferably still of the order of 4°C.

12. Process according to any one of claims 5 to 7, applied to the manufacture of cheeses of the type comprising a coagulation step leading to the formation of a curd and at least one step of extraction of the whey, characterized in that the starting oil-in-water emulsion is preferably a milk and that it consists of adding to the starting oil-in-water emulsion a coagulant so as to obtain on the one hand, a curd suitable for undergoing any cheese-making transformation and on the other hand a whey or aqueous phase containing all or part of the complexes formed and capable of being at least partly separated from the curd in the course of an extraction step.

13. Process according to claim 12, characterized in that the coagulating agent is constituted by at least one acidogen and/or by lactic ferments, associated with or replaced by at least one coagulating enzyme of a suitable nature such as rennet.

14. Process according to any one of claims 1 to 4, characterized in that the contacting and the separation are carried out substantially simultaneously and consist of causing the starting oil-in-water emulsion to migrate through an adsorbent or absorbent constituted at least in part by cyclodextrin.

15. Process according to claim 14, characterized in that the cyclodextrin is immobilized on a support.